Europäisches Patentamt

European Patent Office

Office européen des brevets

(19)

(11) Veröffentlichungsnummer: **0 000 572**
**B1**

(12) **EUROPÄISCHE PATENTSCHRIFT**

(21) Anmeldenummer: 78100482.5

(22) Anmeldetag: 24.07.78

(51) Int. Cl³: **C 08 J 9/20,** // **C 08 F 257/02**

(54) Verfahren zur Herstellung von kugelförmigen, expandierbaren Styrolpolymerisaten

(30) Priorität: 01.08.77 DE 2734607

(43) Veröffentlichungstag der Anmeldung:
07.02.79 Patentblatt 79/03

(45) Bekanntmachung des Hinweises auf die Patenterteilung:
23.07.80 Patentblatt 80/15

(84) Benannte Vertragsstaaten:
BE DE FR GB NL SE

(56) Entgegenhaltungen:
DE - A - 2 338 132
FR - A - 1 368 544
US - A - 3 553 112

(73) Patentinhaber: BASF Aktiengesellschaft
Carl-Bosch-Strasse 38
D - 6700 Ludwigshafen (DE)

(72) Erfinder: Guhr, Uwe, Dr.
Beim Hochgericht 9
D - 6719 Grünstadt (DE)
Moeller, Rolf, Dr.
Strassburger Weg 1
D - 6700 Ludwigshafen (DE)
Stahnecker, Erhard, Dr.
Oberer Rainweg 36
D - 6900 Heidelberg (DE)
Kniese, Wilhelm, Dr.
Auf der Wacht 13
D - 6702 Bad Dürkheim (DE)

Courier Press, Leamington Spa, England.

## Verfahren zur Herstellung von kugelförmigen, expandierbaren Styrolpolymerisaten

Die Erfindung betrift ein Verfahren zur Herstellung von kugelförmigen, expandierbaren Styrolpolymerisaten mit enger Perlgrößenverteilung durch Polymerisation von Styrol, welches in teilchenförmigen Styrolpolymerisaten absorbiert ist.

Kugelförmige, expandierbare Styrolpolymerisate werden üblicherweise durch Polymerisation von Styrol in wäßriger Suspension in Gegenwart eines Treibmittels hergestellt. Dabei entsteht eine Perlgrößenverteilung, die einer Gauss'schen Verteilung entspricht. Aus diesem Perlspektrum lassen sich meist nur ausgewählte Fraktionen auf dem Markt verkaufen, während andere aus verarbeitungstechnischen Gründen nicht direkt verwertbar sind. Dies gilt vor allem für solche Teilchen, deren Größe unter etwa 0,4 bis 0,5 mm liegt. Man versucht zwar, diese zwangsläufig anfallenden Randfraktionen durch Wiederauflösen in monomerem Styrol erneut der Suspensionspolymerisation zuzuführen. Dabei entstehen jedoch im allgemeinen Produkte minderer Qualität.

Man kann auch expandierbare Styrolpolymerisate in einem Extruder unter Druck bei erhöhten Temperaturen aufschmelzen, durch Düsen auspressen und die entstandenen Polystrolstränge in einem Wasserbad abkühlen und in einem Granulator in zylinderförmige expandierbare Granulate einheitlicher Größe überführen. Diese Extrudergranulat-Teilchen lassen sich dann in wäßriger Suspension bei Temperaturen oberhalb ihres Erweichungspunktes und erhöhten Drücken unter Rühren in ein im wesentlichen einheitliches, kugelförmiges Perlmaterial umwandeln (DT—OS 25 34 833). Man muß allerdings bei verhältnismäßig hohen Temperaturen um etwa 125°C arbeiten, was zur Folge hat, daß die erhaltenen Styrolpolymerisat-Teilchen einen verhältnismäßig hohen Innenwassergehalt aufweisen.

In der DT—OS 23 38 132 ist ein Verfahren beschrieben, bei dem man ausgewählte Siebfraktionen vor Styrolpolymerisaten in wäßriger Phase suspendiert, zu dieser Suspension bei erhöhter Temperatur unter Rühren tropfenweise monomeres Styrol zusetzt und dieses in Gegenwart eines organischen Peroxids und eines Polymerisationsverzögerers polymerisiert. Bei diesem zeitraubenden Vorgehen wird erreicht, daß das zugegebene Styrol in den Polymerteilchen absorbiert und dort polymerisiert wird, wobei je nach den Mengenverhältnissen unterschiedlich stark vergrößerte Teilchen mit im wesentlichen einheitlicher Größe erhalten werden. Die Aufgabe des Polymerisationsverzögerers ist eshierbei, die Polymerisation des monomeren Styrols zugunsten der Diffusion in die polymeren Teilchen zurückzudrängen. Würde man die Polymerisation ohne Polymerisationsverzögerer durchführen, so erhielte man neben den erwünschten einheitlich großen Styrolpolymerisat-Perlen feinpulvriges Polystyrol.

Der Erfindung lag die Aufgabe zugrunde, ein einfaches Verfahren zur Herstellung von Kugelförmigen expandierbaren Styrolpolymerisaten vonim wesentlichen einheitlicher Teilchengröße zu entwickeln. Dabei sollte ausgegangen werden von teilchenförmigen Styrolpolymerisaten, die durch Aufpolymerisieren von monomerem Styrol vergrößert werden, wobei die Form der Teilchen — sofern sie nicht von vornherein schon kugelförmig ist — in ein kugelförmige Gestalt umgewandelt wird.

Es wurde nun gefunden, daß diese Aufgabe gelöst wird, wenn man die teilchenförmigen Styrolpolymerisate in wäßriger Suspension zunächst bei Temperaturen unter 100°C mit Styrol imprägniert und dann bei erhöhter Temperatur in Gegenwart von organischen Peroxiden polymerisiert.

Gegenstand der Erfindung ist demzufolge ein Verfahren zur Herstellung von kugelförmigen, expandierbaren Styrolpolymerisaten durch Polymerisation von Stryol in Gegenwart von teilchenförmigem, treibmittelhaltigem Styrolpolymerisat in wäßriger Suspension mit folgenden Verfahrensschritten:

A. treibmittelhaltiges Styrolpolymerisat einer Teilchengröße zwischen 0,1 und 5 mm wird in wäßriger Suspension bei Temperaturen H: 0 und 75°C 0,5 bis 5 Stunden lang mit 10 bis 100 Gew.% (bezogen auf das treibmittelhaltige Polymerisat) Styrol imprägniert,

B. das in den Styrolpolymerisat-Teilchen absorbierte Styrol wird anschließend in der wäßrigen Suspension bei Temperaturen zwischen 90 und 140°C in Gegenwart von 0,01 bis 1 Gew.% (bezogen auf das Styrol) organischem Peroxid polymerisiert.

Unter Styrolpolymerisaten sind Homo- oder Copolymerisate des Styrols zu verstehen, die bis zu 50 Gew.% Comonomere einpolymerisiert enthalten können. Als Comonomere kommen dabei in Frage: $\alpha$-Methylstyrol, kernhalogenierte oder kernalkylierte Styrole, Acrylnitril, Methacrylnitril, Ester der Acrylund Methacrylsäure mit Alkoholen mit 1 bis 8 C-Atomen, Maleinsäureanhydrid oder auch geringe Mengen an Verbindungen, die zwei polymerisierbare Doppelbindungen enthalten, wie Butadien, Divinylbenzol oder Butandiolacrylat.

Die Styrolpolymerisate können übliche Zusatzstoffe enthalten, wie z.B. Farbstoffe, insbesondere lichtechte Pigmentfarbstoffe, ferner Weichmacher, Stabilisatoren, andere Kunststoffe, z.B. Polyäthylen oder Polyisobutylen, Füllstoffe, Zellregulatoren oder Flammschutzmittel.

Die erfindungsgemäß eingesetzen Styrolpolymerisate enthalten in homogener Verteilung Treibmittel oder eine Treibmittelkombination, die das Styrolpolymerisat nicht lösen und deren Siedepunkt unter dem Erweichungspunkt des entsprechenden Styrolpolymerisats liegt, z.B. niedrig siedende aliphatische Kohlenwasserstoffe, $C_nH_{2n+2}$ (mit n = 3 bis 6), Cycloaliphaten oder halogenierte aliphatische Kohlenwasserstoffe, vorzugsweise in Mengen von 2 bis 12 Gew.%, bezogen auf das Polymerisat.

Die Teilchengröße des eingesetzten Styrolpolymerisats kann in weiten Grenzen zwischen 0,1 und 5 mm schwanken. Man kann z.B. ausgehen von unverkäuflichen oder schwer verkäuflichen Randfraktionen aus einem Styrol-Suspensionspolymerisat mit einem mittleren Teilchendurchmesser zwischen 0,2 und 0,5 mm. Sie werden zweckmäßigerweise durch Aussieben in Teilfraktionen mit im wesentlichen einheitlicher Teilchengröße aufgetrennt. Mann kann auch Mahlgut einsetzen, das durch Vermahlen von Randfraktionen mit zu großem Teilchendurchmesser hergestellt wurde. Auch dieses Mahlgut wird zweckmäßigerweise durch Sieben in Teilfraktionen mit einheitlicher Teilchengröße zerlegt. Schließlich kann man Extrudergranulat verwenden, das aus Randfraktionen durch Aufschmelzen, Extrudieren durch Lochdüsen und Granulieren gewonnen wurde. Bedingt durch die Herstellungsweise hat dieses Granulat im wesentlichen einheitlich Teilchengröße. Hier werden bevorzugt zylinderförmige Teilchen mit einem Durchmesser zwischen 0,2 und 2 mm und einer Länge zwischen 0,3 und 3 mm eingesetzt.

Die treibmittelhaltigen Styrolpolymerisat-Teilchen werden, vorzugsweise unter Zusatz eines anorganischen oder organischen Suspensionsstabilisators, unter Rühren in Wasser suspendiert. Als Stabilisatoren kommen z.B. in Frage: wasserlösliche oder in Wasser dispergierbare Homo- oder Copolymerisate des Vinylpyrrolidons und der Acrylsäure, Polyvinylalkohole und Celluloseäther; ferner schwerlösliche Erdalkaliphosphate, -carbonate oder -sulfate, gegebenenfalls zusammen mit Emulgatoren oder Tensiden. Sie werden vorzugsweise in Mengen von 0,01 bis 4 Gew.%, bezogen auf das Styrolpolymerisat, eingesetzt.

Dieser Suspension werden 10 bis 100, vorzugsweise 50 bis 90 Gew.% (bezogen auf das treibmittelhaltige Styrolpolymerisat) monomeres Styrol zugesetzt. Das Styrol kann wieder zu bis zu 50 % seines Gewichts durch die oben gannanten Comonomeren ersetzt sein. Die Suspension wird dann 0,5 bis 5 Stunden, vorzugsweise 1 bis 3 Stunden lang bei Temperaturen zwischen 0 und 75°C und insbesondere zwischen 20 und 50°C gehalten. Dabei soll das Styrol — auch in Gegenwart von üblichen organischen Peroxiden — noch nicht polymerisieren. Es diffundiert jedoch in das Styrolpolymerisat ein, so daß dieses mit Monomeren imprägniert wird. Die Diffusion mit Monomeren in die Polymerteilchen ist dann besonders vollständig und gleichmäßig, wenn das Imprägnieren unter Druck bis zu 20 bar, vorzugsweise zwischen 3 und 10 bar erfolgt, und wenn die Suspension, z.B. durch kräftiges Rühren, in Bewegung gehalten wird.

Anschließend an den Imprägnierschritt A wird in einem Polymerisationschritt B das absorbierte Styrol durch Erhöhung der Temperatur auf 90 bis 140°C, vorzugsweise auf 100 bis 125°C polymerisiert. Diese Polymerisation erfolgt zweckmäßigerweise direkt in der Suspension, die beim Imprägnierschritt A anfällt in Gegenwart der selben Suspensionsstabilisatoren und unter dem gleichen Druck, ebenfalls unter Rühren. Die Polymerisation wird durch organische Peroxide in Mengen von 0,01 bis 1 Gew.% (bezogen auf die Monomeren) ausgelöst. Diese Peroxide können der Suspension entweder erst in der Polymersationsstufe zugesetzt werden, vorzugsweise sind sie jedoch bereits beim Imprägnierschritt in der Suspension anwesend. Dabei können sie schon von der Polymerisation her im Styrolpolymerisat enthalten gewesen sein, oder sie können diesem beim Extrudieren zugemischt worden sein. Es ist aber auch möglich, die Peroxide in Styrol gelöst der Suspension beim Imgrägnierschritt zuzugeben.

Im Verlauf des Polymerisationsschritts nimmt das Volumen der Styrolpolymerisat-Teilchen entsprechend dem Mengenverhältnis Polymerisat zu Monomeres zu, außerdem werden zylinderförmige oder sonstwie unregelmäßig geformte Teilchen in kugelförmige umgewandelt.

Geht man im Fall von runden Teilchen von Randfraktionen mit zu geringer Teilchengröße aus, so gelingt es durch das erfindungsgemäße Verfahren auf einfache Weise, die Teilchen so zu vergrößern, daß sie in der Praxis zur Herstellung von Schaumstoff-Formkörpern Verwendung finden können. Man kann die Verfahrensschritte A + B dabei auch zwei oder mehrere Male wiederholen, wenn man eine entsprechend starke Erhöhung der Teilchengröße erreichen will.

Bei der Umwandlung von zylinderförmigem Extrudergranulat in kugelförmige Perlen hat das erfindungsgemäße Verfahren darüber hinaus noch den Vorteil, daß wegen der weichmachenden Wirkung der absorbierten Monomeren auf das Polymerisat die Behandlungstemperatur um etwa 10 bis 15°C gesenkt werden kann. Dadurch sinkt der Innenwassergehalt der Styrolpolymerisat-Perlen und diese brauchen nicht mehr so stark oder gar nicht mehr getrocknet werden. Außerdem ist es möglich, lösliche Hilfsstoffe, wie Amine oder Bromverbindungen, gezielt in das Styrolpolymerisat einzuführen, wodurch eine einfache Regulierung der Zellstruktur der anschließend hergestellten Schaumstoffe möglich wird.

Die erfindungsgemäß hergestellten expandierbaren Styrolpolymerisate können auf übliche Weise durch Behandlung mit heißen Gasen unter Freisetzung der Treibmittel in Schaumstoffe überführt werden.

Die in den Beispielen genannten Teile und Prozente beziehen sich auf das Gewicht.

## BEISPIEL 1

In einen verschlossenen 40 l-Rührdruckkessel werden 17 l Wasser gegeben. Anschließend werden 110 g Trinatriumphosphat und 13 kg eines kugelförmigen Polystyrols eingefüllt, welches 6,2 % Pentan als Treibmittel enthält, und einen mittleren Perldurchmesser von 0,5 mm aufweist. Die Suspension wird unter Rühren mit 330 ml einer 35 %igen Calziumchorid-Lösung versetzt, danach werden 15 ml eines Arylalkylsulfonates als Emulgierhilfsmittel und 680 ml einer 10 %igen wäßrigen Lösung von Polyvinylpyrrolidon eingefüllt. Dieser wäßrigen Lösung werden 3,25 kg Styrol, welches 0,36 % tert.-Butylperbenzoat enthält, zugegeben. Nach Aufpressen von 1 bar Stickstoff wird bei 20°C 1 Stunde lang gerührt, danach wird die Temperatur innerhalb von 3 Stunden auf 90°C und weitere 2,5 Stunden auf 115°C erhöht und dort 6 Stunden belassen. Nach dem Abkühlen werden Perlen mit einem mittleren Durchmesser von 0,54 mm erhalten, ohne daß nebenher feinpulvriges Polystyrol entstanden ist. Die Perlen werden von der wäßrigen Phase abgetrennt, gewaschen, getrocknet und mit 0,04 % Zinkstearat oberflächlich beschichtet. Beim Vorschäumen mit Wasserdampf neigt das Produkt zum Verkleben. Beim Ausschäumen in einem Formkörperautomaten bei einem Druck von 1,0 bar werden Mindestformverweilzeiten von 200 Sekunden erreicht.

## BEISPIEL 2

Beispiel 1 wird wiederholt, wobei jedoch die expandierbaren Polystyrolperlen mit einem Pigmentfarbstoff dunkelblau eingefärbt sind. Man erhält ein Produkt mit gleichmäßiger Farbverteilung in der Perle. Wieße, nicht eingefärbte Polystyrolteilchen, die bei einer separaten Polymerisation des Styrols entstehen würden, werden nicht gebildet.

## BEISPIEL 3

In einen 40 l-Rührdruckkessel werden 17 l Wasser gegeben, in dem 110 g Trinatriumphosphat gelöst sind. Hierzu werden innerhalb von 15 Minuten 330 ml einer 35 %igen Calziumchlorid-Lösung getropft. Dann werden 10,8 kg eines 6 %. Pentan enthaltenden Polystyrols mit einem mittleren Perldurchmesser von 0,2 mm eingefüllt. Anschließend werden 5,42 kg Styrol, in dem 19,5 g tert.-Butylperbenzoat gelöst sind, zugegeben. Nach einstündigem Rühren bei 20°C werden 1,5 ml Emulgator und 680 ml einer 10 %igen Polyvinylpyrrolidon Lösung zugegeben. Danach wird unter Rühren innerhalb von 5 Stunden auf 105°C aufgeheizt. Bei dieser Temperatur werden 1 350 ml Pentan mit Hilfe von Stickstoff dem Reaktionsgemisch zugedrückt. Anschließend heizt man auf 115°C auf und beläßt bei dieser Temperatur für weitere 4 Stunden.

Nach dem Abkühlen werden die erhaltenen Perlen mit einem mittleren Durchmesser von 0,22 mm wie in Beispiel 1 beschrieben aufgearbeitet. Beim 6-minütigen Vorschäumen mit Wasserdampf werden Schaumperlen mit sehr niedrigem Schüttgewicht von 10 g/l erhalten.

## BEISPIEL 4

Beispiel 1 wird wiederholt, wobei 100 % monomeres Styrol, bezogen auf expandierbares Polystyrol, eingesetzt wird, in dem 0,36 % tert.-Butylperbenzoat gelöst ist. Ferner werden 1,5 l Pentan zugesetzt. Das entsprechend aufgearbeitete Endprodukt weist einen Treibmittelgehalt von 6,8 % auf und besitzt einen mittleren Perldurchmesser von 0,6 mm. Das mit 12 Zellen/mm sehr feinzellige Material zeigt das gleiche Schäumverhalten wie in Beispiel 1 beschrieben.

## BEISPIEL 5

In der in Beispiel 1 beschriebenen Apparatur werden 17 l Wasser eingefüllt, in welchem 110 g Trinatriumphosphat gelöst sind. Dazu gibt man 6,5 kg eines Polystyrolgranulates mit einer Länge von 0,5 mm und einem Durchmesser von 0,8 mm, welches 5 % Pentan enthält. Danach werden 330 ml einer 35 %igen Calziumchloridlösung zugegeben, dann 15 ml eines Emulgators und 680 ml einer 10 %igen wäßrigen Lösung von Polyvinylpyrrolidon und schließlich 6,5 kg Styrol, in dem 0,36 % tert.-Butylperbenzoat gelöst sind. Man rührt die Mischung bei 20°C 2 Stunden lang, preßt 5 bar Stickstoff auf, danach wird innerhalb von 3 Sunden gleichmäßig auf 100°C erhitzt, wonach 700 g Pentan mit Stickstoff zugedrückt werden. Dann wird innerhalb von 2 Stunden auf 115°C aufgeheizt. Diese Temperatur wird für 6 Stunden beibehalten. Die nach der Aufarbeitung erhaltenen runden Perlen besitzen einen mittleren Durchmesser von 1,0 mm bei einer engen Verteilungsbreite. Das mit 0,04 % Zinkstearat beschichtete Produkt ergibt beim Vorschäumen Schaumperlen mit einem Schüttgewicht unter 12 g/l und einer Zellzahl von 10 bis 12 Zellen/mm.

## BEISPIEL 6

Beispiel 5 wird wiederholt, wobei jedoch ein treibmittelhaltiges Polystyrol-Extrudergranulat eingesetzt wird, dem 1 % Hexabromcyclododecan und 1 000 ppm n-Hexylamin beim Extrudieren zugesetzt wurden. Es entsteht ein perlförmiges Material mit einem mittleren Durchmesser von 1,0 mm bei unverändert enger Verteilungsbriete. Beim Vorschäumen wird ein grobzelliges Produkt mit 6 bis 8 Zellen/mm erhalten.

**Patentansprüche**

1. Verfahren zur Herstellung von kugelförmigen, expandierbaren Styrolpolymerisaten durch Polymerisation von Styrol in Gegenwart von teilchenförmigem, treibmittelhaltigem Styrolpolymerisat in wäßriger Suspension, *gekennzeichnet durch* folgende Verfahrensschritte:

A. treibmittelhaltiges Styrolpolymerisat mit einer Teilchengröße zwischen 0,1 und 5 mm wird in wäßriger Suspension bei Temperaturen zwischen 0 und 75°C 0,5 bis 5 Stunden lang mit 10 bis 100 Gew.% (bezogen auf das treibmittelhaltige Polymerisat) Styrol imprägniert,

B. das in den Styrolpolymerisat-Teilchen absorbierte Styrol wird anschließend in der wäßrigen Suspension bei Temperaturen zwischen 90 und 140°C in Gegenwart von 0,01 bis 1 Gew.% (bezogen auf das Styrol) organischem Peroxid polymerisiert.

2. Verfahren zur Herstellung von Styrolpolymerisaten nach Anspruch 1, *dadurch gekennzeichnet,* daß man in Stufe A ausgeht von kugelförmigen Styrolpolymerisat-Teilchen mit einem mittleren Durchmesser zwischen 0,2 und 0,5 mm, wobei in Stufe B durch das polymerisierende Styrol der Durchmesser vergrößert wird.

3. Verfahren zur Herstellung von Styrolpolymerisaten nach Anspruch 1, *dadurch gekennzeichnet,* daß man in Stufe A ausgeht von zylinderförmigen Styrolpolymerisat-Teilchen mit einem Durchmesser zwischen 0,2 und 2 mm und einer Läng zwischen 0,3 und 3 mm, wobei in Stufe B unter Volumenvergrößerung durch das polymerisierende Styrol die Zylinderform in eine Kugelform umgewandelt wird.

## Claims

1. A process for the production of spherical, expandable styrene polymers by polymerization of styrene in the presence of particulate styrene polymer, containing expanding agent, in aqueous suspension, *characterized by* the following process steps:

A. styrene polymer containing expanding agent and having a particle size between 0.1 and 5 mm is impregnated with 10 to 100% by weight (based on the polymer containing expanding agent) for 0.5 to 5 hours in aqueous suspension at temperatures between 0 and 75°C,

B. the styrene absorbed in the styrene polymer particles is then polymerized in the aqueous suspension at temperatures between 90 and 140°C in the presence of 0.01 to 1% by weight (based on the styrene) of an organic peroxide.

2. A process for the production of styrene polymers according to claim 1, *characterized in that* in step A spherical styrene polymer particles having a mean diameter between 0.2 and 0.5 mm are used, the diameter being increased in stage B as a result of the styrene polymerizing.

3. A process of the production of styrene polymers according to claim 1, *characterized in that* in step A cylindrical styrene polymer particles having a diameter between 0.2 and 2 mm and a length between 0.3 and 3 mm are used, the cylindrical shape being transformed into a spherical shape with an increase in volume as a result of the styrene polymerizing.

## Revendications

1. Procédé de préparation de polymères expansibles du styrène en forme de billes par polymérisation du styrène en présence d'un polymère du styrène contenant un agent gonflant et à l'état de particules en suspension aqueuse, ce procédé se caractérisant en ce qu'il comprend les stades opératoires ci-après:

A. On imprègne un polymère du styrène contenant un agent gonflant, à une dimension de particule de 0,1 à 5 mm, en suspension aqueuse, à des températures de 0 à 75°C, pendant une durée d'$\frac{1}{2}$ h à 5 h, par 10 à 100% en poids (par rapport au polymère contenant l'agent gonflant) de styrène,

B. on polymérise ensuite le styrène absorbé dans les particules de polymères du styrène, dans la suspension aqueuse, à des températures de 90 à 140°C, en présence de 0,01 à 1% en poids (par rapport au styrène) de peroxyde organique.

2. Procédé selon la revendication 1, caractérisé en ce que, au stade opératoire A, on part de particules sphériques de polymère du styrène, à un diamètre moyen de 0,2 à 0,5 mm, dont on fait grossir le diamètre dans le stade opératoire B par le styrène qui polymérise.

3. Procédé selon la revendication 1, caractérisé en ce que, au stade opératoire A, on part de particules cylindriques d'un polymère du styrène, à un diamètre de 0,2 à 2 mm et à une longueur de 0,3 à 3 mm et, dans le stade opératoire B, on provoque sous l'action du styrène qui polymérise une augmentation du volume des particules et une transformation de la forme cylindrique en la forme sphérique.